# EUROPEAN PATENT SPECIFICATION

(11) **EP 2 794 238 B1**
(45) Date of publication and mention of the grant of the patent: **01.07.2020**
(21) Application number: 12805716.3
(22) Date of filing: 20.12.2012
(51) Int. Cl.: B29C 65/22, B29C 65/32, B65B 51/22, B65B 51/30

(54) **SEAL WIRE FOR A VERTICAL FLOW WRAPPER**
DICHTUNGSDRAHTES FÜR EINE VERTIKALE FLOW-WRAP-VERPACKUNGSMASCHINE
FIL DE SCELLEMENT POUR FARDELEUSE À FLUX VERTICAL

(30) Priority: 23.12.2011 EP 11010188
(43) Date of publication of application: 29.10.2014
(73) Proprietor: GEA Food Solutions Weert B.V., 6006 RV Weert (NL)
(72) Inventor: VAN RENS, Joseph Johan Maria, NL-6003 BK Weert (NL); HOUBEN, Eric Joseph Elizabeth, NL-5988 JS Helden (NL); BAUMEISTER, Bruno Gerfried, 52078 Aachen (DE)
(74) Representative: Wolff, Felix
(86) International application number: PCT/EP2012/076461
(87) International publication number: WO 2013/092901

(56) References cited:
- EP-A1- 0 498 764
- EP-A1- 0 890 516
- EP-A1- 0 950 608
- WO-A1-2009/141925
- WO-A2-00/64662
- DE-A1- 4 202 883
- FR-A- 1 476 741
- US-A- 2 589 777

## Description

The present invention relates to a seal wire, particularly for a vertical flow wrapper, made from an electrically conductive material. The present invention further relates to a sealing tool, a vertical flow wrapper and a process for adjusting the temperature of a sealing wire. Additionally, the present invention relates to a process to check the quality of a seal.

The sealing wires are known from the state of the art and are e.g. utilized to apply a cross-seal to a tube of packaging material, for example a plastic film, e.g. in a vertical flow wrapper. Theses sealing wires are heated and preferably pressed against a plastic film, to which the seal shall be applied. During the contact of the sealing wire with the plastic film, this plastic film is heated above its plasticization temperature and thus, after cooling down again the film is sealed together. However, in the event of a failure of such a sealing wire, it was difficult to exchange these sealing wires.

FR1476741 A discloses various types of sealing wires with different welding areas and with different shapes, including forming a closed loop. US2589777 A discloses a sealing wire formed as a circumference. DE4202883 A1 discloses the use of sealing belts.

It was therefore the objective of the present invention, to provide a sealing wire, which does not comprise the deficiencies according to the state of the art.

This objective is attained by a sealing wire, which is made from an electrically conductive material, preferably a metal material which is provided as a closed loop. Thus, the sealing wire is a ring. Preferably, the sealing wire is cut from a metal-sheet, preferably, an iron-, aluminum- and/or steel-sheet. Preferably, the ends of the sealing wire are connected by a form- and/or a force-fit. Alternatively or additionally, the ends of the wire are connected by a material fit, e.g. by gluing, welding, soldering or the like. However, it is important, that the connection of the ends of the wire is electrically conductive. It is also possible to produce the sealing wire as a single piece, e.g. cut it from a tube, whose sidewall is made from a conductive material, for example from iron, metal steel and/or the like. In this case, the ends of the wire need not be connected.

The disclosure regarding this subject matter of the present application also applies to the other subject matters and vice versa.

Preferably, this sealing wire is hot directly connected to an electrical power supply. Particularly its ends are not connected to an electrical power supply. Thus, in case of a failure of the sealing wire, the sealing wire must not be disconnected from the electrical power supply, by, for example disconnecting plugs of the like.

Preferably, the sealing wire comprises over its length at least two regions with different electrical conductivity. Preferably, the region, which applies the seal to the film tube, has a lower electrical conductivity than the rest of the loop. Alternatively or additionally, the sealing wire may comprise two regions with different diameters, whereas the diameter of the region, which applies, the seal to the film tube, is preferably smaller than the diameter of the rest of the tube. Alternatively or additionally, at least one region of the wire comprises two or more materials. While the sealing wire is preferably made from one single material, base material, more preferably, it comprises in the region of the sealing wire loop, which is not utilized to apply a seal to the film tube, a coating, preferably made from a material which has a higher electrical conductivity than the base material of the sealing wire. Preferably, the sealing wire is made from a base material and partially coated with a material of higher electrical conductivity than the base material.

The inventive sealing wire has the advantage that mainly its region, which is in contact with the film is heated-up. The inventive sealing wire can be tensioned easily by applying a force to the inner side of the ring. The inventive sealing ring can be changed easily. No electrical connections have to be disconnected and reconnected.

Preferably, the region of the sealing wire, which is utilized to apply the seal to a film, is coated with an anti-stick material, for example Teflon® or the like, which more preferably has at least a low electrical conductivity, preferably lower than the base material of the sealing wire and/or lower than the coating of the region of the sealing wire which is not utilized for applying a seal.

Preferably, the sealing wire is not circular but has a larger length than width. Preferably, the form of the sealing wire is at least partially rectangular, or rectangular with rounded edges or elliptical, whereas, more preferably, one of the longer sides of the sealing wire is utilized to apply the seal to a plastic film.

The sealing wire comprises an elastic element namely a spring. This element is used to tension the sealing wire. However, this elastic element must be electrically conductive to a certain extent. Preferably, the elastic element is made from metal.

Another embodiment of the present invention is a sealing tool, which comprises the sealing wire which preferably extents around a seating jaw. The sealing jaw is more preferably at least partially made from a plastic material. This plastic material has the advantage of electric isolation. This preferred embodiment of the present invention has the advantage, that the sealing jaw has a reduced weight and a reduced thermal capacity. Thus, it heats up faster and cools off rather fast. In addition, the advantage of using such plastic material is the low thermal conductivity and the low thermal capacity which means the plastic material only takes very little heat from the heating wire. The sealing jaw preferably comprises means to tension the sealing wire, which is placed around it. Preferably, at least one first part of the sealing is displaceable relative to another second part of the sealing jaw, for example, in order to tension the sealing wire. The displacement of the first part can be made manually or automatically and preferably prior to attaching the sealing jaw to a corresponding machine.

The disclosure regarding this subject matter of the present application also applies to the other subject matters and vice versa.

Preferably, the sealing tool comprises an electrical magnet, preferably a coil. The magnetic field provided by the electrical magnet induces a current in the sealing wire, which heats the sealing wire. The magnetic field preferably changes with time and/or space.

In a preferred embodiment, the sealing wire and/or the sealing jaw is movable relative to the electromagnet. This preferred embodiment of the present invention has the advantage, that the sealing jaw can be moved towards the film tube to apply a cross-seal and back without moving the electromagnet.

In an even more preferred embodiment, the sealing tool comprises an outer jaw. This outer jaw is preferably displaceable towards and away from the film tube and has the main function to clamp the film tube prior to applying the cross-seal. Preferably, the sealing jaw is displaceable relative to the outer jaw. The outer jaw is, for example, U-shaped

In an even more preferred embodiment, the magnet, particularly the electromagnet, comprises a core, more preferably with a slot. The slot is provided as small as possible, however, large enough to provide sufficient space to move the sealing wire and or the the sealing tool, at least partially, through this slot, particularly for assembly and/or disassembly purposes. Preferably, the core of the magnet is ring-shaped and has a slot.

Another embodiment of the present invention is a vertical flow wrapper comprising one or more sealing tool(s) according to one of the preceding claims.

The disclosure regarding this subject matter of the present application also applies to the other subject matters and vice versa.

A vertical flow wrapper is a packaging machine, which forms a plane film web into a film tube, which is transported along a filling tube. Two ends of this film tube are sealed together by a longitudinal sealing tool. Subsequently, the packaging item is filled into the film tube and a cross-seal is applied to the film tube to close the package. Simultaneously or after applying the cross-seal, the finalized packages are cut off the film-tube. The cross-seal-unit of the inventive flow wrapper comprises one, two or more of the inventive sealing tools, which are, for example, displaced towards each other in order to provide the cross-seal and are moved apart after the cross-seal has applied and the finalized package has been cut off the film tube. The flow wrapper can be operated continuously or intermittently.

Preferably, the sealing tool comprises cutting means to cut the package from the film tube. These cutting means are preferably part of the sealing jaw.

Another preferred or inventive subject matter of the present invention is a vertical flow-wrapper, which comprises a sealing tool with a sealing wire which is heated by an energy supply which is controlled by a controller and data acquisition means, which acquire the data regarding the energy-transfer to the sealing wire versus time during the sealing of a film and computer means which analyzes the acquired data.

The disclosure regarding this subject matter of the present application also applies to the other subject matters and vice versa.

Preferably, the electrical energy directly or indirectly induces an electrical current in the sealing wire which heats the sealing wire. Preferably, the sealing wire is heated by induction.

The controller is preferably an on/off-controller.

Preferably, the frequency of the control action and/or the data acquisition is at least 1 kHz. Due to this high frequency, the energy-transfer data is very accurate and deviations from reference data can be determined easily.

Preferably, the vertical flow-wrapper comprises means to determine the temperature of the sealing wire, wherein the energy transfer to the sealing wire is based on this temperature. In case the determined temperature is too low in comparison to a desired temperature, the energy transfer to the sealing wire will be activated and deactivated in case the temperature of the sealing wire is equal to or above a desired temperature.

Another subject matter of the present application is a process to check the quality of a sealing provided by the sealing means of a vertical flow wrapper, wherin a measured energy-transfer to the sealing means versus time profile is analyzed and based on the outcome of this analysis the quality of the seal is determined.

The disclosure regarding this subject matter of the present application also applies to the other subject matters and vice versa.

Preferably, the measured energy-transfer versus time profile is compared to a reference energy-transfer versus time profile.

Preferably, the produced package is sorted out in case the measured energy-transfer versus time profile deviates from the reference energy-transfer versus time profile, because the seal provided to the film is not acceptable. In this case, the reference energy-transfer versus time profile is the profile of a bag which comprises an acceptable seal.

In another preferred embodiment of the present invention, the produced package is sorted out in case the measured energy-transfer versus time profile equals the reference energy-transfer versus time profile, because the seal provided to the film and/or the produced package is not acceptable. In this case, the reference energy-transfer versus time profile is the profile of a bag which does not comprise an acceptable seal.

Preferably, the energy-transfer profile during the seal process is monitored in real time and more preferably constantly compared with a reference energy-transfer profile. As soon as a deviation from or an accordance with the reference profile occurs, this will be registered by, for example, a computer system and if needed, the bag is sorted out.

Another subject matter of the present invention is a process for adjusting the temperature of a sealing wire, without measuring the temperature of the sealing wire.

The disclosure regarding this subject matter of the present application also applies to the other subject matters and vice versa.

The process preferably comprises one or more of the following steps:
- the voltage across the coil and the current through the coil is measured without the sealing wire in the magnetic field of the coil. From this measurement, R_{mag} can be calculated.
- the voltage across the coil and the current through the coil is measured with the sealing wire in the magnetic field of the coil at a known temperature T₁. From this measurement, R_{p_t1} is calculated.
- With this information the resistance R_{1_seal_t1} of the sealing wire at known T1 can be determined, for example with the equation R_{1_seal_t1} = (R_{mag} ^{∗} R_{p_t1})/ (R_{mag} - R_{p_t1}).
- During operation the voltage across the coil and the current through the coil is measured with the sealing wire in the magnetic field. With this information, the resistance R_{p_12} is calculated.
- With this information the resistance R_{1_seal_t2} of the sealing wire is determined, for example with the equation R_{1_seal_t2} = (R_{mag} ^{∗} R_{p_t2})/ (R_{mag}^{∗} R_{p_t2}).
- From the equation T_{sealwire} = (R_{1_seal_t2} - R_{1_seal_t1})/(R_{1_seal_t1} ^{∗} rho) the current temperature T_{sealwire} is calculated, whereas rho is the linear temperature coeffizient of the sealing wire.
- By knowing T_{sealwire} the temperature off the sealing wire is adjusted, if needed.

The inventions are now explained according to figures 1 - 9. These explanations do not limit the scope of protection. The explanations apply to all embodiments of the present invention likewise.
- **Figure 1**: shows the inventive seal wire.
- **Figure 2**: shows the seating jaw.
- **Figure 3**: shows the sealing tool.
- **Figures 4a and b**: show the displacement of the sealing jaw relative to the magnetic field.
- **Figure 5**: shows the temperature control scheme
- **Figure 6**,: shows a first sealing situation, in which an acceptable seal is provided to the film
- **Figure 7**: shows the temperature of the seal wire versus time and the corresponding energy uptake for the first sealing situation, the reference situation
- **Figure 8**: shows a second sealing situation, in which the produced bag is unacceptable
- **Figure 9**: shows the temperature of the seal wire versus time and the corresponding energy uptake for the first sealing situation

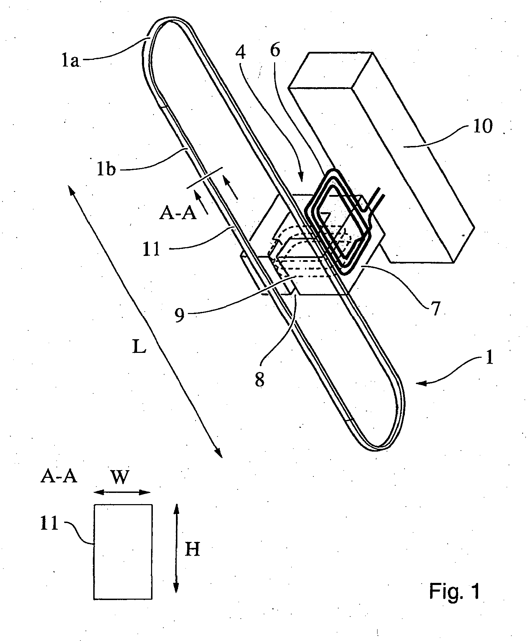

Figure 1 shows the inventive sealing wire 1, which is a closed loop produced from a basic electrically conductive material, for example a metal-sheet, whose ends are connective by a form- and or force-fit and/or by an adhesive bond. The connection of the two ends is electrically conductive as well. The person skilled in the art understands that it is also possible to produce the sealing wire from a tube-like body, made from an electrical conductive material, so that the ends need not be connected. In the present case, the cross-section of the sealing wire is rectangular with rounded edges, i.e. its length L is larger than its width W, whereas the seal is applied by the sealing surface 11 of the sealing region 1b of the sealing wire 1. As can be also seen from figure 1, the sealing wire comprises preferably two regions 1a, 1b, whereas the region 1b has a lower electrical conductivity than the region 1a. This preferred embodiment of the present invention has the advantage, that in region 1b more heat is generated than in region 1 a. The length of the region 1b is approximately the length of the cross-seal. Due to the difference in the electrical conductivity, the region 1a has a lower temperature than the region 1b.

The difference in electrical conductivity can be achieved by a difference in the magnitude of the cross-section of the sealing wire, whereas the cross-section of region 1b is smaller than in the region 1a, by a difference in material, whereas the material in region 1b has a lower electrical conductivity than the material in region 1a, and/or by a coating in region 1a, which comprises a higher electrical conductivity than the base material from which the sealing wire is made.

As can be further seen from figure 1 the sealing wire 1 extends through a magnetic field 9, which is provided by an electromagnet, which comprises a coil 6 and here optionally a core 7, preferably made from a ferrite material. The core 7 is essentially a ring, preferably made from a ferrite material, which has a slot 8. The width of the slot is provided as small as possible, however, targe enough to insert the seating wire 1 and/or a sealing jaw to which the sealing wire is connected, at least partially into the core 7, so that the magnetic field 9 extends to a certain extent around the sealing wire 1. In the present case, the magnetic field extent around a part of the region 1a of the sealing wire. By changing the magnetic field 1, a current is induced into the sealing wire 1 and thus the sealing wire is heated. The coil 6 of the electromagnet is connected to an electrical-/electronic-eguipment, which provides the electrical energy for the coil and controls the electromagnet. Preferably, the coil 6 is part of a circuit board. The coil is preferably furthermore connected to a control system which adjusts the temperature of the sealing wire 1, particularly the temperature of the region 1b to the desired temperature. The person skilled in the art understands, that the sealing wire itself is not directly connected to an energy supply, for example by an electrical plug or the like. Thus, in case the sealing wire needs to be change, the sealing wire must not be plugged or unplugged.

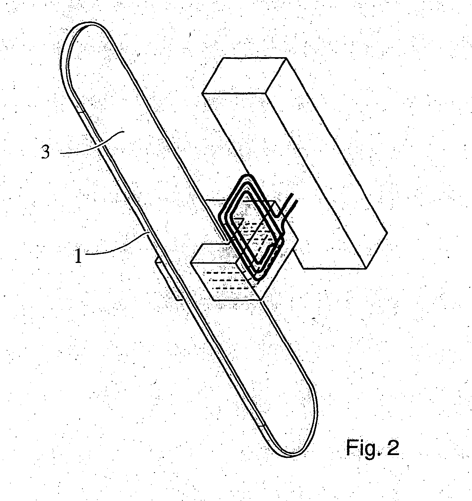

Figure 2 shows the inventive sealing jaw 3. Around the circumference of this sealing jaw, the sealing wire 1 as described in figure 1 extends. In the present case, the sealing jaw 3 is also at least partially inserted into the ring-like core of the electromagnet. The sealing jaw is preferably tensioned around the sealing jaw. Thus, the sealing jaw preferably comprises tensioning means (not depicted) which tension the sealing-wire manually or automatically to the right tension. The sealing jaw is preferably made from a plastic material, so that it comprises little weight and/or a relatively small thermal conductivity and/or heat capacity.

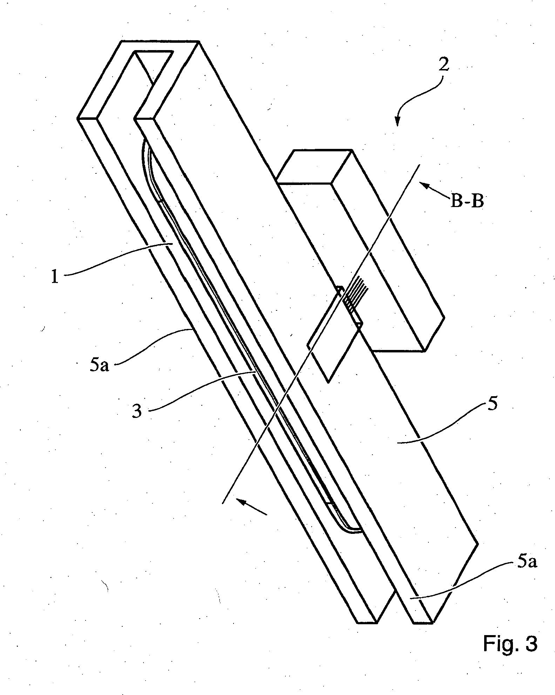

Figure 3 shows the inventive sealing jaw.

The person skilled in the art understands, that there are two of these sealing jaws needed in order to provide a cross-seal to the film tube, whereas, preferably, only one sealing jaw comprises heating means, for example in form of a sealing wire.

In the present case, the sealing tool 2 comprises the sealing jaw 3 as described according to figure 2 and an outer jaw 5, which is in the present case U-shaped. The sealing jaw 3 is provided within the two legs of the U and can be, in a preferred embodiment, displaced relative to the outer jaw 5 parallel to the legs of the U. This displacement is e.g. driven by motor means. The tips of the legs of the u-shaped outer jaw are utilized to clamp the film tube prior to applying the cross seal. During sealing, the sealing wire is pressed with a certain pressure, the sealing pressure, against the film.

In case of a failure of the sealing wire the sealing jaw 3 is taken out of the outer jaw 5. The defect sealing wire 1 is removed from the sealing jaw 3 and a new sealing wire 1 is put on the sealing jaw 3. The sealing jaw is then put back into the outer jaw 5. This preferred embodiment of the present invention has the advantage that during the change of the sealing wire, no electrical disconnection/reconnection has to take place. The temperature of the sealing jaw cools down very fast, since it is preferably made from plastic.

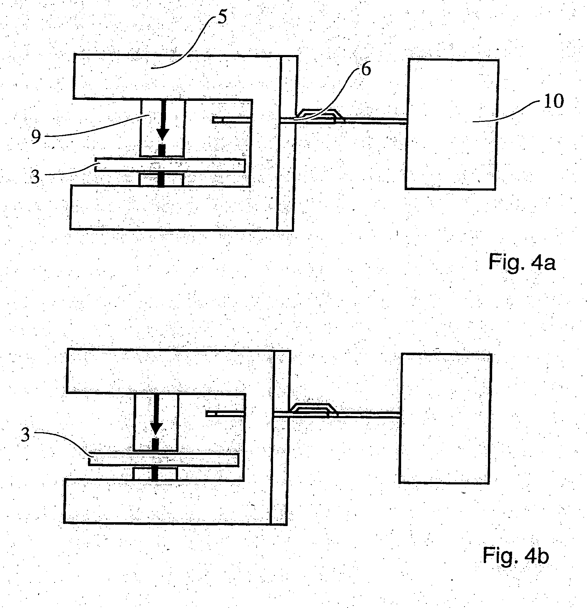

Figures 4a and b depict a cut through the inventive sealing tool 2 along the line B-B shown in figure 3. It can be clearly seen, that the sealing jaw 3 is displaced relative to the magnetic field 9 from a remote position (figure 4a) into a sealing position (figure 4b). Thus, only very few parts with little weight need to be moved during sealing.

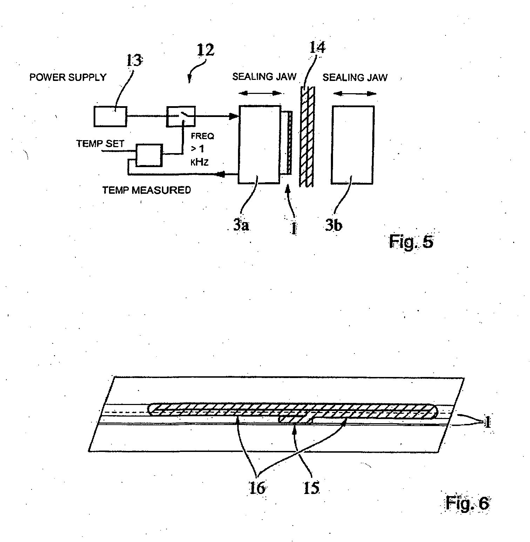

Figure 5 shows the power supply to the electrical wire, which comprises an energy source 13 and a controller 12, here a switch, which can turn the electrical current from the energy source on and off. This power supply is directly or indirectly connected to the seal wire 1 and heats the seal wire 1, for example by inducing an electrical current in the seal wire 1. Preferably, the energy source is connected to the coil of the electromagnet. The power supply further comprises temperature measuring means, which measure the temperature of the seal wire 1, preferably in the sealing region 1b. This means can be for example a thermo couple or the calculation as described above. Based on this measured temperature, the controller either opens or closes a circuit that supplies the seal wire with electrical energy directly or indirectly. The control frequency is preferably greater than 1 kHz. The energy supplied to the sealing is constantly measured and the corresponding energy supply profile is preferably stored, at least temporarily. The sealing system comprises two sealing jaws 3a, 3b which can move together and apart as depicted by the double-arrow and are pressed together during sealing. Between the seal jaws 3a, 3b is the film two be sealed. This film comprises normally at least two layers. In the present case only one sealing jaw 3a comprises a heated sealing wire 1.

As shown now according to figures 6 - 9, based on the analysis of the energy-supply-profile, a control system, for example a computer, can determine, whether a package and/or a seal is as desired.

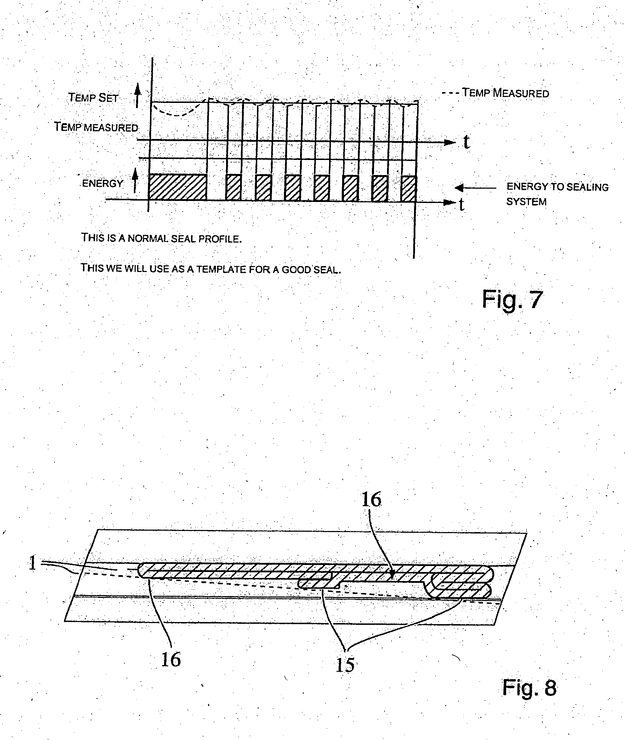

Figures 6 and 7 show the reference situation, i.e. the production of a correct packaging item as desired.

When the seal Wire moves towards the film to be sealed, it, for example, first makes contact with the film at a projection 15, for example the longitudinal seal of the bag. As soon as the seal wire 1 touches this projection 15, the temperature of the sealing wire will drop, because heat is transferred from the sealing wire to the film. This temperature decrease will be detected by the controller (Temp Measured according to Fig. 5), which will start to transfer energy to the wire to increase its temperature again to the desired temperature. The transfer of heat from the wire to the film will increase the temperature of the film. As soon as the film has reached its plasticization temperature, the film starts the get soft and due to the sealing pressure, the sealing wire moves into the soft film and will contact the film at the main sealing area 16. At that point in time the temp of the sealing wire will drop again and even stronger, than the first time, because heat is transferred to the film at a larger area than previously. Because the controller wants to maintain the sealing wire at the desired temperature, the "SetTemp", energy must be transfer on the sealing wire. Again this energy transfer is recorded. When seal wire is at the "SetTemp" again, the energy transfer will be at least reduced. Because the other side off the film, here the right hand side, is at a lower temperature than the side of the film touching the sealing wire, here the left hand side, there is a heat flux from left to right which will lower also the temperature of the seal wire, so that the controller starts the energy transfer to the seal wire again. This control process continues over the entire desired sealing time and the curve of the energy transfer data is acquired as a function of time and the resulting data is stored as the reference data. Preferably, additionally, the temperature data versus time of the seal wire is also stored.

Figure 7 shows the measured temperature of the seal wire versus time and the energy transfer to the seal wire versus time over the sealing period; i.e. the time needed for a correct seal. It can be seen that initially much energy is needed when the seal wire starts to touch the film until the entire seal wire 1 is in contact with the main sealing area 16 and the seal wire has reached the desired temperature again, because the film is at a lower temperature than the sealing wire. Afterwards, only heat flux from one side of the film to the other and/or heat losses to the ambient have to be compensated.

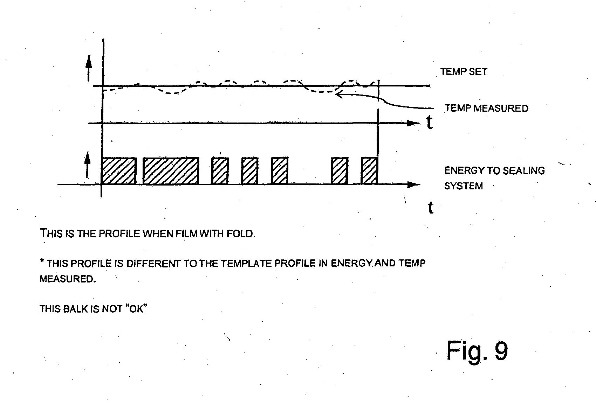

Figures 8 and 9 show an undesired situation, because the bag comprises an undesired fold on its right hand side. After the sealing jaw starts to move towards the film, the sealing wire 1 will first hits this fold and its temperature starts to drop, then, after having heated up the fold, the sealing wire will move forward under the sealing pressure and touch the projection 15 due to the longitudinal seal before the sealing wire comes into touch with the main sealing area 16. This undesired bag and thus this undesired seal is reflected in the recorded energy profile as can be seen from figure 9. Instead of one energy-transfer-peek at the beginning of the sealing period, there are two energy-transfer-peaks in the present case. A computer connected to the inventive machine, preferably monitors the energy transfer profile in real time and will realize this difference by comparing the present energy-transfer versus time curve and the reference energy-transfer versus time curve and will determine that the produced package is incorrect, This package will be sorted out downstream from the cross seal. The person skilled in art understands that undesired objects, like packing items, ice or the like in the sealing area can also be determined and these packages can then be sorted out. Due to measurements of the temperature of the seal wire at a frequency of at least 1 kHz and a corresponding control action and data acquisition, the energy transfer versus time curves are so accurate, that even slight deviation from the reference curve will be determined.

Alternatively or additionally, the energy-transfer versus time profile is stored and used as a profile for an undesired bag. In case the energy-transfer versus time profile of an actual package produced matches this reference profile for an undesired bag, the bag will be sorted out.

By comparison of actual energy-transfer versus time profiles with reference profiles, preferably in real time, the quality of a seal and or the produced packaging item can be automatically determined without further equipment and packages with an insufficient sealing or an insufficient shape can be sorted out. \

In the present case, the seal control was explained by means of a cross seal. However the method is also applicable to a longitudinal seal. Different reference energy transfer profiles can be stored for different packages and/or different films.

### List of Reference Signs:

- 1: sealing wire
- 1a: area with high electrical conductivity
- 1b: area with low electrical conductivity
- 2: sealing tool, cross sealing tool
- 3: sealing jaw
- 3a: left sealing jaw
- 3b: right sealing jaw
- 4: electromagnet
- 5: outer jaw
- 6: coil
- 7: core
- 8: slot
- 9: magnetic field
- 10: electronics
- 11: sealing area, sealing surface
- 12: controller
- 13: energy supply
- 14: film to be sealed
- 15: projecting area, longitudinal seal, undesired folding
- 16: main sealing area
- W: width of the wire
- H: height of the wire
- L: length of sealing area 11

## Claims

1. Sealing wire (1) made from an electrically conductive material, preferably a metal material, which is suitable to be pressed with a certain pressure, the sealing pressure, against a film to apply a seal to the film and which is provided as a closed loop, **characterized in, that** the sealing wire comprises an electrically conductive elastic element, namely a spring, used to tension the sealing wire.

2. Sealing wire (1), according to claim 1, **characterized in, that** it comprises two regions with different magnitude of cross sections and/or two regions made from different materials.

3. Sealing wire (1) according to claim 1 or 2, **characterized in that** it is partially coated.

4. Sealing wire (1) according to one of the preceding claims, **characterized in, that** its cross section has a larger length (l) than width (w).

5. Sealing tool (2), **characterized in, that** it comprises a sealing wire (1) according to one of the preceding claims.

6. Sealing tool (2) according to claim 5, **characterized in, that** the sealing wire extends around a sealing jaw (3).

7. Sealing tool (2) according to claim 6, **characterized in, that** the sealing jaw (3) is, at least partially made from a plastic material.

8. Sealing tool (2) according to claims 6 or 7, **characterized in, that** it comprises an electromagnet (4) preferably with a coil (6).

9. Sealing tool (2) according to claims 6 - 8, **characterized in, that** the sealing jaw (3) is movable relative to the magnetic field provided by the electromagnet (4)

10. Sealing tool (2) according to claims 6 - 9, **characterized in, that** it comprises an outer jaw (5).

11. Sealing tool (2) according to claim 10, **characterized in, that** the sealing jaw is displaceable relative to the outer jaw (5).

12. Sealing tool (2) according to claims 6 - 11, **characterized in, that** the electromagnet (4) comprises a core (7) with a slot (8).

13. Vertical Flow-wrapper comprising at least one sealing tool according to claims 6 - 12.

14. Vertical flow-wrapper according to claim 13, **characterized in, that** the sealing tool applies a cross seal.

## Patentansprüche

1. Dichtungsdraht (1), gefertigt aus einem elektrisch leitfähigen Material, vorzugsweise einem Metallmaterial, das geeignet ist, mit einem bestimmten Druck, dem Siegeldruck, gegen eine Folie gepresst zu werden, um eine Dichtung auf die Folie aufzubringen, und der als eine geschlossene Schleife bereitgestellt wird, **dadurch gekennzeichnet, dass** der Dichtungsdraht ein elektrisch leitfähiges elastisches Element umfasst, namentlich eine Feder, die verwendet wird, um den Dichtungsdraht zu spannen.

2. Dichtungsdraht (1) nach Anspruch 1, **dadurch gekennzeichnet, dass** er zwei Bereiche mit unterschiedlicher Größe der Querschnitte und/oder zwei Bereiche, die aus unterschiedlichen Materialien gefertigt sind, umfasst.

3. Dichtungsdraht (1) nach Anspruch 1 oder 2, **dadurch gekennzeichnet, dass** er teilweise beschichtet ist.

4. Dichtungsdraht (1) nach einem der vorhergehenden Ansprüche, **dadurch gekennzeichnet, dass** sein Querschnitt eine größere Länge (l) als Breite (w) aufweist.

5. Siegelwerkzeug (2), **dadurch gekennzeichnet, dass** es einen Dichtungsdraht (1) nach einem der vorhergehenden Ansprüche umfasst.

6. Siegelwerkzeug (2) nach Anspruch 5, **dadurch gekennzeichnet, dass** sich der Dichtungsdraht um eine Siegelbacke (3) erstreckt.

7. Siegelwerkzeug (2) nach Anspruch 6, **dadurch gekennzeichnet, dass** die Siegelbacke (3) zumindest teilweise aus einem Kunststoffmaterial gefertigt ist.

8. Siegelwerkzeug (2) nach Ansprüchen 6 oder 7, **dadurch gekennzeichnet, dass** es einen Elektromagneten (4) umfasst, vorzugsweise mit einer Spule (6).

9. Siegelwerkzeug (2) nach Ansprüchen 6 - 8, **dadurch gekennzeichnet, dass** die Siegelbacke (3) relativ zu dem durch den Elektromagneten (4) bereitgestellten Magnetfeld bewegbar ist.

10. Siegelwerkzeug (2) nach Ansprüchen 6 - 9, **dadurch gekennzeichnet, dass** es eine äußere Backe (5) umfasst.

11. Siegelwerkzeug (2) nach Anspruch 10, **dadurch gekennzeichnet, dass** die Siegelbacke relativ zur äußeren Backe (5) versetzbar ist.

12. Siegelwerkzeug (2) nach Ansprüchen 6 - 11, **dadurch gekennzeichnet, dass** der Elektromagnet (4) einen Kern (7) mit einem Schlitz (8) umfasst.

13. Vertikale Flow-Wrap-Verpackungsmaschine, umfassend zumindest ein Siegelwerkzeug nach Ansprüchen 6 - 12.

14. Vertikale Flow-Wrap-Verpackungsmaschine nach Anspruch 13, **dadurch gekennzeichnet, dass** sie eine Querversiegelung aufbringt.

## Revendications

1. Fil de scellement (1) réalisé dans un matériau électriquement conducteur, de préférence un matériau métallique, apte à être pressé avec une certaine pression, la pression de scellement, contre un film pour appliquer un scellement au film et qui est fourni sous forme de boucle fermée, **caractérisé en ce que**, le fil de scellement comprend un élément élastique électriquement conducteur, à savoir un ressort, utilisé pour tendre le fil de scellement.

2. Fil de scellement (1) selon la revendication 1, **caractérisé en ce qu'**il comprend deux régions ayant des sections transversales de grandeur différente et/ou deux régions réalisées dans des matériaux différents.

3. Fil de scellement (1) selon la revendication 1 ou 2, **caractérisé en ce qu'**il est partiellement revêtu.

4. Fil de scellement (1) selon l'une des revendications précédentes, **caractérisé en ce que** sa section transversale a une longueur (L) supérieure à la largeur (1).

5. Outil de scellement (2) **caractérisé en ce qu'**il comprend un fil de scellement (1) selon l'une des revendications précédentes.

6. Outil de scellement (2) selon la revendication 5, **caractérisé en ce que** le fil de scellement s'étend autour d'une mâchoire de scellement (3).

7. Outil de scellement (2) selon la revendication 6, **caractérisé en ce que** la mâchoire de scellement (3) est réalisée au moins partiellement en un matériau plastique.

8. Outil de scellement (2) selon la revendication 6 ou 7, **caractérisé en ce qu'**il comprend un électroaimant (4) de préférence doté d'une bobine (6).

9. Outil de scellement (2) selon les revendications 6 à 8, **caractérisé en ce que** la mâchoire de scellement (3) est déplaçable par rapport au champ magnétique créé par l'électroaimant (4).

10. Outil de scellement (2) selon les revendications 6 à 9, **caractérisé en ce qu'**il comprend une mâchoire externe (5).

11. Outil de scellement (2) selon la revendication 10, **caractérisé en ce que** la mâchoire de scellement est déplaçable par rapport à la mâchoire externe (5).

12. Outil de scellement (2) selon les revendications 6 à 11, **caractérisé en ce que** l'électroaimant (4) comprend un cœur (7) doté d'une fente (8).

13. Fardeleuse à flux vertical comprenant au moins un outil de scellement selon les revendications 6 à 12.

14. Fardeleuse à flux vertical selon la revendication 13, **caractérisé en ce que** l'outil de scellement applique un scellement transversal.
